Europäisches Patentamt

European Patent Office

Office européen des brevets

(19)

(11) Publication number: **0 300 605 B1**

# (12) EUROPEAN PATENT SPECIFICATION

(45) Date of publication of patent specification: **19.08.92**

(51) Int. Cl.5: **G11B 5/187**, G11B 5/23, G11B 5/235

(21) Application number: **88305231.8**

(22) Date of filing: **08.06.88**

(54) **Magnetic head for reading and/or writing data from and/or onto a magnetic medium.**

(30) Priority: **22.07.87 US 76441**

(43) Date of publication of application:
**25.01.89 Bulletin 89/04**

(45) Publication of the grant of the patent:
**19.08.92 Bulletin 92/34**

(84) Designated Contracting States:
**DE FR GB**

(56) References cited:

PATENT ABSTRACTS OF JAPAN, unexamined applications, P field, vol.11, no. 45, February 10, 1987 THE PATENT OFFICE JAPANESE GOVERNMENT page 115 P 546

PATENT ABSTRACTS OF JAPAN, unexamined applications, P field, vol. 11, no. 147, May 14, 1987 THE PATENT OFFICE JAPANESE GOVERNMENT page 20 P 575

PATENT ABSTRACTS OF JAPAN, unexamined applications, P field, vol. 10, no. 15, January 21, 1986 THE PATENT OFFICE JAPANESE GOVERNMENT page 62 P 422

(73) Proprietor: **SEAGATE TECHNOLOGY INTERNATIONAL**
**c/o Maples & Calder, P.O. Box 309**
**Georgetown, Grand Cayman Island(KY)**

(72) Inventor: **Perlov, Craig Meyer**
**1665 Fairway Drive**
**Los Altos California 94022(US)**

(74) Representative: **Kenyon, Sarah Elizabeth et al**
**J. Miller & Co. Lincoln House 296-302 High**
**Holborn**
**GB-London WC1V 7JH(GB)**

Rank Xerox (UK) Business Services

## Description

This invention relates to magnetic heads for reading and/or writing data from and/or onto a magnetic media.

Optimising a particular recording system having a magnetic media and a ferrite read and write head entails balancing a number of factors. In order to increase the voltage of a pulse on readback, it is desirable to produce a magnetic media with a large coercive force. It is also desirable to have the magnetic field strength changing at a relatively rapid rate when the magnetic field strength equals the coercive force during the write mode. This produces sharp pulses.

Several factors control the magnetic field. The strength of the magnetic field can be increased by increasing the current level in the core. The core material, however, will saturate when the current level reaches a certain level. This level varies depending on the material comprising the core.

In the past, ferrite was used as the material of the core. The problem with ferrite alone is that the usable coercive force of the magnetic media is limited by the magnetic saturation of the core material. If the current in the windings is increased beyond the ferrite saturation level, the magnetic field strength does not change at a rapid rate when the magnetic field strength equals the coercivity.

To increase the rate of change of the magnetic field, a layer of higher permeability material is placed on the confronting surface of a C-portion of the core in a flux gap. This layer prevents the magnetic field from leaving the core at most areas other than the gap. The current level in the coil can be changed to vary the field strength to a level where the magnetic field strength will change at a rapid rate when the field strength equals the medium coercivity value. A magnetic head of this kind is disclosed in US-A-4 646 184.

This represents an advance. However, this advance produces additional problems. The junction between the ferrite and the higher permeability material on the confronting surface creates a ghost gap or another small gap. At the ghost gap, flux lines leave the ferrite, enter the atmosphere, and re-enter the high permeability layer on the other side of the ghost gap. The flux lines in the atmosphere near the ghost gap cause noise in the recording system by magnetising the magnetic media below the ghost gap. On reading back undesirable ghost images or pulses are produced which makes decoding the read data pulses more difficult since the actual data pulses must be differentiated from the ghost pulses.

Thus, there is a need for a head which can be driven at higher current levels without saturating and which eliminates ghost images when the data is read back from the magnetic media. The absence of ghost images on readback will ease decoding of the signals and the current level can be increased so that the rate of change in the field strength will be rapid when the field strength equals the coercivity value.

According to the present invention there is provided a magnetic head for reading and/or writing data from and/or onto magnetic media comprising: a core of ferro-magnetic material having an air bearing surface which, in operation, confronts the magnetic medium, said core having a transducing gap therein which forms first and second confronting surfaces, the first confronting surface having a smaller area than the second confronting surface; means for inducing magnetic flux in the core; and a first layer of magnetic material having a magnetic permeability greater than the ferro-magnetic material, said first layer being deposited on said first confronting surface and forming a joint between said ferromagnetic material and said first layer, the joint being substantially parallel to the transducing gap, characterised by a second layer of magnetic material having a magnetic permeability greater than the ferro-magnetic material deposited on the air bearing surface of the core adjacent the first confronting surface, the second layer being integral with said first layer.

In one embodiment said second layer overlaps the joint between the first layer and the ferromagnetic material of the core.

The invention is illustrated, merely by way of example, in the accompanying drawings, in which:-

Figure 1 is a side view of a prior art read and write magnetic head with metal on one of the confronting surfaces in a gap;

Figure 2 is a side view of the prior art head shown in Figure 1 showing magnetic field lines generated in operation;

Figure 3 is an exploded view of a junction between the metal on one of the confronting surfaces of the gap and the remaining portion of the head shown in Figure 1 showing the magnetic field lines at the junction;

Figure 4 is a side view of a first embodiment of a magnetic head according to the present invention; and

Figure 5 is a side view of the magnetic head shown in Figure 4 showing the flux lines as they pass therethrough.

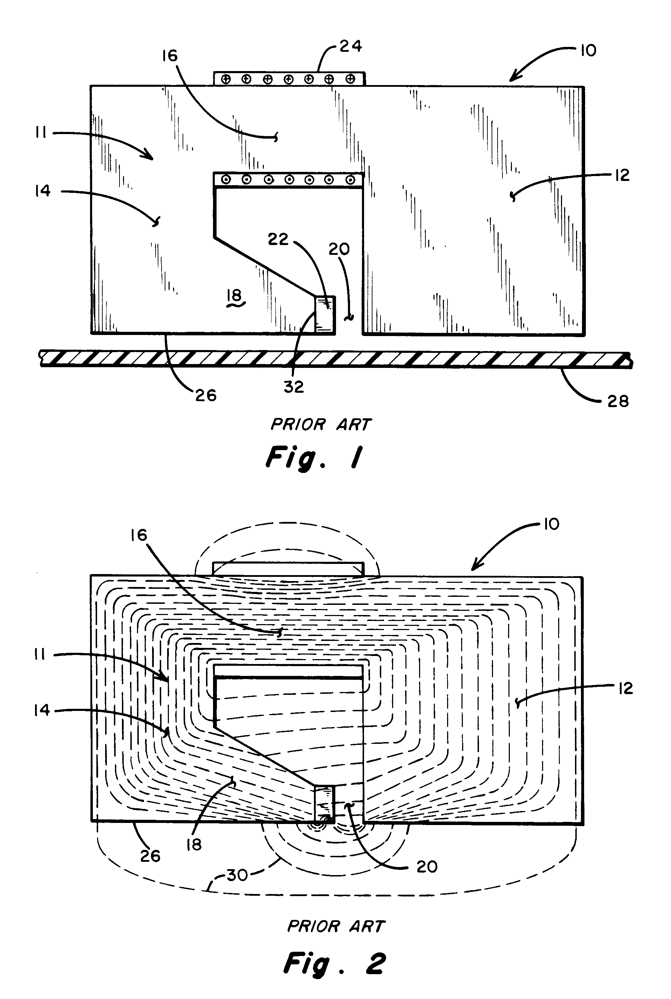

Figure 1 shows a prior art magnetic head 10, which is described in U.S. Patent No. 4 646 184. The head 10 has a unitary core 11 which is comprising a first pole element commonly called an "I" bar 12, which is rectangular in shape, and a second pole element commonly called a "C" bar 14, which is C-shaped. The "C" bar 14 has a leg 16 and a leg 18. The leg 16 is longer than the leg 18. The "I" bar 12 and the leg 16 of the "C" bar are joined to form the unitary core 11. The "C" bar 14 and the "I" bar 12 are joined so that the shorter leg 18 terminates near the "I" bar 12 and their confronting surfaces form a gap 20 therebetween. The "I" bar 12 and the "C" bar 14 are made of a first ferro-magnetic material, such as ferrite.

A thin film 22 of a second magnetic material is deposited on the confronting surface of the "C" bar 14 adjacent the gap 20. The second magnetic material has a higher magnetic permeability than the first ferro-magnetic material which makes up the "I" bar 12 and the "C" bar 14. A coil 24 is wrapped around the leg 16 of the "C" bar 14. As is well known in the art, passing current through the coil 24 produces a magnetic field in the magnetic head 10. The magnetic field crosses the gap 20. The magnetic head 10 has an air-bearing surface 26 which is substantially perpendicular to the gap 20 which is along the air-bearing surface 26. When the air-bearing surface 26 is passed over a magnetic media 28, the magnetic field fringing from the gap 20 enters a magnetic media 28 and magnetises it.

Turning now to Figure 2, the magnetic head 10 is shown with magnetic field lines 30 denoting the pattern of the magnetic field in and around the magnetic head 10. For the sake of clarity, the coil 24 has been eliminated in Figure 2. As the current and the coil 24 is increased, the density of the magnetic field lines, known as magnetic flux, also increases.

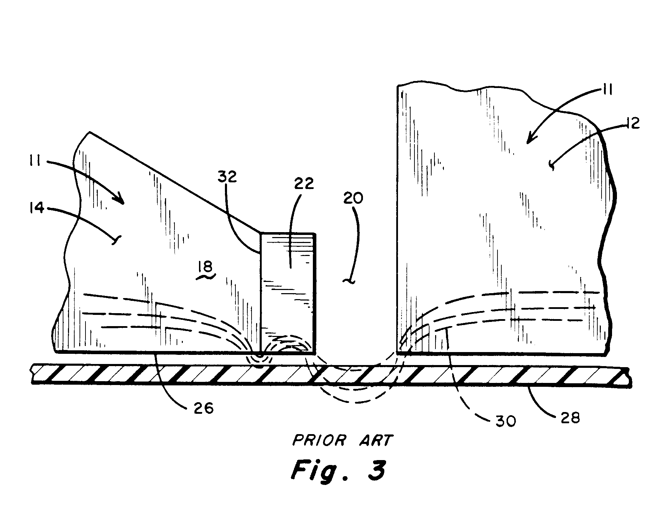

A junction 32 or interface between the short leg 18 and the thin metal film 22 acts as a gap. Figure 3 clearly shows that the magnetic field lines 30 leave the short leg 18 of the "C" bar 14, enter the atmosphere and then re-enter the thin film 22. The junction 32 causes problems in the form of noise when the data is read back from the magnetic media 28. The magnetic field lines near the junction 32 also magnetise the magnetic media 28, although not to the same extent as when the magnetic field lines 30 leave the thin film 22, cross the gap 20 and then re-enter the "I" bar 12. The noise caused by the magnetic field lines 30 near the junction 32 is in the form of ghost images of the magnetisation produced in the magnetic media 28 at the gap 20. The ghost images make differentiation of the readback signals more difficult.

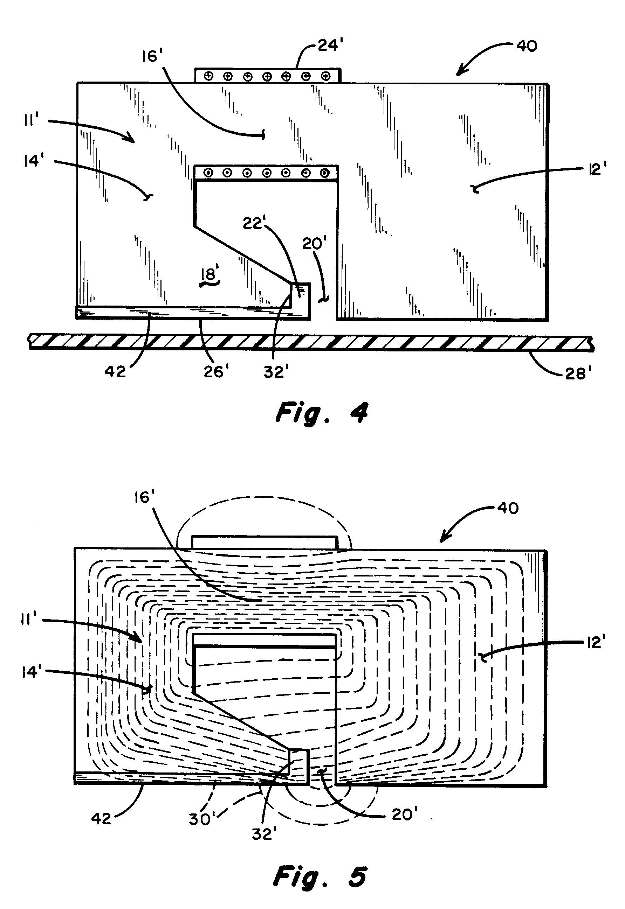

Figures 4 and 5 show one embodiment of a magnetic head 40 according to the present invention. This magnetic head contains magnetic field lines 30′ within the magnetic head to prevent magnetisation of magnetic media 28′ near a junction 32′ or pseudo gap.

The magnetic head 40 is similar to the magnetic head 10. The magnetic head 40 has an "I" bar 12′ and a "C" bar 14′. The "C" bar 14′ has two legs 16′,18′. The "I" bar 12′ and the "C" bar 14′ are attached to form a unitary core 11′ of a first magnetic material with the confronting surfaces forming a gap 20′. The magnetic head 40 has a thin film 22′ of a second magnetic material on one of the confronting surfaces adjacent the gap 20′. The second magnetic material used to form the thin film 22' adjacent the gap 20' extends along an air-bearing surface 26' of the "C" bar 14' to form a layer 42. The second magnetic material has a higher level of magnetic saturation than the first ferro-magnetic material, comprising the remaining portion of the "I" bar 12' and the "C" bar 14'. The second magnetic material is a material such as an alloy of aluminium ferrite and silicon, known as "Alfesil" (Trade Mark).

The layer 42 overlaps the junction 32' on the air-bearing surface 26'. The layer 42 prevents fringing of the magnetic field lines 30' (Figure 5) near the junction 32'. The layer 42 has a higher magnetic saturation and carries the magnetic field lines 30' within the magnetic head 40. As a result, no magnetic field lines 30' enter the magnetic media 28' near the junction 32' and so no ghost images are produced on readback.

This beneficial result is easily explained with the help of Figure 5. Figure 5 shows the magnetic field lines 30' in the magnetic head 40. The layer 42 has a higher magnetic permeability and therefore can carry a greater number of magnetic field lines 30' per unit of cross-sectional area. The layer 42 serves to contain the magnetic field lines 30'. The magnetic field lines will generally take the path of least reluctance. The atmosphere has a much lower permeability than the layer 42 of the second magnetic material. Since the layer 42 can carry more magnetic field lines than the first ferro-magnetic material and since the layer 42 provides a lesser reluctance path to magnetic field flow, the magnetic field lines stay contained in the layer 42 rather than entering the atmosphere.

## Claims

1. A magnetic head for reading and/or writing data from and/or onto magnetic media comprising: a core (11') of ferro-magnetic material having an air bearing surface (26') which, in operation, confronts the magnetic medium, said core having a transducing gap (20') therein which forms first and second confronting surfaces, the first confronting surface having a smaller area than the second confronting surface; means (24') for inducing magnetic flux in the core (11'); and a first layer (22') of magnetic material having a magnetic permeability greater than the ferro-magnetic material, said first layer being deposited on said first confronting surface and forming a joint between said ferromagnetic material and said first layer, the joint being substantially parallel to the transducing gap, characterised by a second layer (42) of magnetic material having a magnetic permeability greater than the ferro-magnetic material deposited on the air bearing surface (26') of the core adjacent the first confronting surface, the second layer being integral with said first layer (22').

2. A magnetic head as claimed in claim 1 characterised in that said second layer (42) overlaps the joint between the first layer (22') and the ferro-magnetic material of the core (11').

## Patentansprüche

1. Magnetkopf zum Lesen und/oder Schreiben von Daten von und/oder auf einen magnetischen Aufzeichnungsträger, mit: einem Kern (11') aus ferromagnetischem Material, der eine Luftlageroberfläche (26') aufweist, die im Betrieb dem magnetischen Aufzeichnungsträger gegenübersteht, wobei der Kern einen darin befindlichen Wandlerspalt (20') aufweist, der erste und zweite gegenüberstehende Oberflächen bildet, von denen die erste gegenüberstehende Oberfläche eine geringere Fläche als die zweite gegenüberstehende Oberfläche aufweist, Einrichtungen (24') zum Induzieren eines Magnetflusses in dem Kern (11'), und einer ersten Schicht (22') aus magnetischem Material, das eine magnetische Permeabilität aufweist, die größer als die des ferro-magnetischen Materials ist, wobei die erste Schicht auf der ersten gegenüberstehenden Oberfläche abgeschieden ist und eine Verbindung zwischen dem ferromagnetischen Material und der ersten Schicht bildet und wobei die Verbindung im wesentlichen parallel zum Wandlerspalt ist,
dadurch gekennzeichnet, daß eine zweite Schicht (42) aus einem magnetischen Material mit einer magnetischen Permeabilität, die größer als die des ferromagnetischen Materials ist, auf die Luftlageroberfläche (26') des Kerns benachbart zur ersten gegenüberliegenden Oberfläche abgeschieden ist, wobei die zweite Schicht einstückig mit der ersten Schicht (22') ist.

2. Magnetkopf nach Anspruch 1,
dadurch gekennzeichnet, daß die zweite Schicht (42) die Verbindurch zwischen der ersten Schicht (22') und dem ferromagnetischen Material des Kerns (11') überlappt.

## Revendications

1. Tête magnétique destinée à lire et/ou à enregistrer des données sur un support magnétique, comprenant : un noyau (11') en matière ferromagnétique ayant une surface de portée pneumatique (26') qui, en fonctionnement, fait face au support magnétique, ledit noyau ayant un entrefer de transducteur (20') qui forme des première et seconde surfaces en regard, la première des surfaces en regard étant d'une aire inférieure à celle de la seconde des surfaces en regard ; des moyens (24') destinés à induire un flux magnétique dans le noyau (11') ; et une première couche (22') de matière magnétique ayant une perméabilité magnétique supérieure à celle de la matière ferromagnétique, ladite première couche étant déposée sur ladite première des surfaces en regard et formant un joint entre ladite matière ferromagnétique et ladite première couche, le joint étant sensiblement parallèle à l'entrefer de transducteur, caractérisée par une seconde couche (42) de matière magnétique ayant une perméabilité magnétique supérieure à celle de la matière ferromagnétique déposée sur la surface de portée magnétique (26') du noyau dans la région adjacente à la première des surfaces en regard, la seconde couche étant d'un seul tenant avec ladite première couche (22').

2. Tête magnétique selon la revendication 1, caractérisée en ce que ladite seconde couche (42) recouvre le joint entre la première couche (22') et la matière ferromagnétique du noyau (11').

PRIOR ART

**Fig. 1**

PRIOR ART

**Fig. 2**

PRIOR ART

# Fig. 3

Fig. 4

Fig. 5